(19) Europäisches Patentamt

European Patent Office

Office européen des brevets

(11) **EP 0 691 506 B1**

(12) **EUROPÄISCHE PATENTSCHRIFT**

(45) Veröffentlichungstag und Bekanntmachung des Hinweises auf die Patenterteilung:
**23.09.1998 Patentblatt 1998/39**

(51) Int Cl.$^6$: **F16L 47/06**

(21) Anmeldenummer: **95810429.1**

(22) Anmeldetag: **26.06.1995**

(54) **Zum Verbinden zweier Kunststoffrohre dienende Muffe**

Sleeve for connecting two plastic pipes

Manchon pour raccorder deux tuyaux en matière plastique

(84) Benannte Vertragsstaaten:
**AT BE CH DE ES FR GB IT LI**
Benannte Erstreckungsstaaten:
**SI**

(30) Priorität: **08.07.1994 CH 2182/94**

(43) Veröffentlichungstag der Anmeldung:
**10.01.1996 Patentblatt 1996/02**

(73) Patentinhaber: **Hobas Engineering AG**
**CH-4054 Basel (CH)**

(72) Erfinder:
• **Carlström, Börge**
**CH-4104 Oberwil (CH)**

• **Kunze, Peter**
**D-17033 Neubrandenburg (DE)**
• **Mitteregger, Johann**
**A-9371 Brückl (AT)**

(74) Vertreter: **Zbinden, Paul A. et al**
**Patentanwaltsbüro Eder AG**
**Lindenhofstrasse 40**
**4052 Basel (CH)**

(56) Entgegenhaltungen:
**FR-A- 2 133 173**          **FR-A- 2 367 976**
**FR-A- 2 439 077**          **FR-A- 2 824 968**
**FR-E- 74 793**

**Beschreibung**

Zum Verbinden zweier Rohre werden Muffen verwendet. Als Muffen dienen entweder zylindrische Rohrabschnitte, in die sich von jeder Seite je ein Ende eines Rohres einschrauben oder einschieben und irgendwie befestigen lässt. Es ist aber auch möglich, das eine Ende eines Rohres bei der Herstellung mit einer als Muffe dienenden Erweiterung zu versehen, in die dann das nicht erweiterte Ende eines gleichartig ausgebildeten Rohres eingeschoben wird. Diese beiden Verfahren sind auch bei Kunststoffrohren bekannt. Bekannt sind des weitern die Vor- und die Nachteile dieser beiden Muffenarten.

Um eine dichte Verbindung zwischen dem Rohr und der Hülse sicherzustellen, kann man entweder das Rohr oder die Muffe mit Dichtungsmitteln versehen. Bekannt ist es, in der Nähe des Rohrendes eine Nut anzubringen, in welcher ein Dichtungsmittel, wie zum Beispiel ein O-Ring oder etwas ähnliches, untergebracht wird. Da dadurch die Wandstärke des Rohres geschwächt wird, was insbesondere bei Rohren, die im Pressverfahren im Boden verlegt werden, nicht erwünscht ist und daher vermieden werden sollte, sind auch Muffen bekannt, die aus einem elastischen, allenfalls mit Lippen versehenen, dichtenden Innenteil und einem auf diesem aufgebrachten Überzug aus festem Material bestehen. Derartige Muffen besitzen zwei identisch ausgebildete und zur Aufnahme von je einem Rohrende dienende Teilabschnitte, die im wesentlichen gleich lang sind. Solche Muffen werden auch als Doppelmuffen bezeichnet.

Die FR-A 2'367'976 offenbart eine solche Doppelmuffe, Diese besitzt eine symmetrische Aussenhülse sowie eine ebenfalls symmetrische Dichtungshülse, welche in einer Aussparung der Aussenhülse sitzt. Letztere weist in ihrer Mitte eine als Anschlag für die beiden Rohre dienende Rippe auf und ist zusätzlich mit randseitig angeordneten Dichtungslippen versehen.

Die mit Muffen der vorstehend beschriebenen Art miteinander zu verbindenden Rohren werden sehr oft in einem vorbereiteten Rohrbett verlegt, dessen Bodenoberfläche unregelmässig beschaffen ist. Dies hat zur Folge, dass die beiden Rohre mit ihren Rohrenden nicht immer exakt aneinander zu liegen kommen und daher mit ihren Achsen einen kleinen Winkel bilden.

Diese gegenseitige Verschiebung der Rohrachsen zweier miteinander zu verbindenden Rohre ist nun der Grund dafür, dass es bei der Verwendung von bekannten Muffen zu Spannungen im Bereich der Rohrkupplung kommt, was sehr oft Delaminierungen und Rissbildungen an der Muffe und an den Rohrenden zur Folge hat. Des weitern kann in diesem Fall keine optimale Dichtung der Kupplung erreicht werden.

Ausgehend von der Muffe der FR-A 2'367'976 liegt der vorliegenden Erfindung die Aufgabe zugrunde, eine Muffe vorzuschlagen, die die vorgenannten Nachteile nicht aufweist, also eine Muffe, mit der spannungsfrei und ohne nennenswerten Dichtigkeitsverlust zwei Rohre miteinander verbunden werden können, deren Achsen nicht zusammenfallen.

Diese neue Muffe ist durch die im Patentanspruch 1 angegebenen Merkmale gekennzeichnet.

Die erfindungsgemässe Muffe ist dabei speziell zum Verbinden zweier glasfaserverstärkter Kunststoffrohre geeignet und kann an verschiedene Arten von Rohren angeschlossen werden. So kann die Muffe beispielsweise zum Verbinden zweier Rohre dienen, die über ihre ganze Länge den gleichen Aussendurchmesser haben. Die Muffe kann aber selbstverständlich auch zum Verbinden zweier Rohre dienen, die einen zylindrischen Endabschnitt mit einem im Vergleich zum übrigen Rohrstück verkleinerten Durchmesser aufweisen. In diesem Fall wird insbesondere die Herstellung einer Rohrleitung mit konstantem Aussendurchmesser, also eine Rohrleitung ohne äussere Wülste oder Rippen ermöglicht.

Die verschiedenen Ausführungsformen der erfindungsgemässen Muffe sind Gegenstand der abhängigen Ansprüche.

Nachfolgend wird anhand der beiliegenden Zeichnung ein Ausführungsbeispiel der Erfindung beschrieben. In der Zeichnung zeigt

die Figur 1 einen Ausschnitt aus einem Längsschnitt einer erfindungsgemässen Muffe mit einer ersten Dichtungshülse,

die Figur 2 einen Längsschnitt durch die in der Figur 1 dargestellte Muffe und die beiden Endabschnitte von zwei miteinander zu verbindenden Rohre,

die Figur 3 einen Längsschnitt durch einen Teil einer zweiten Dichtungshülse,

die Figur 4 einen Ausschnitt aus einem Längsschnitt durch eine dritte Dichtungshülse sowie durch eine diese unterstützende Stützhülse, und

die Figur 5 einen Vertikalschnitt durch eine Schleudertrommel zur Herstellung der erfindungsgemässen Muffe.

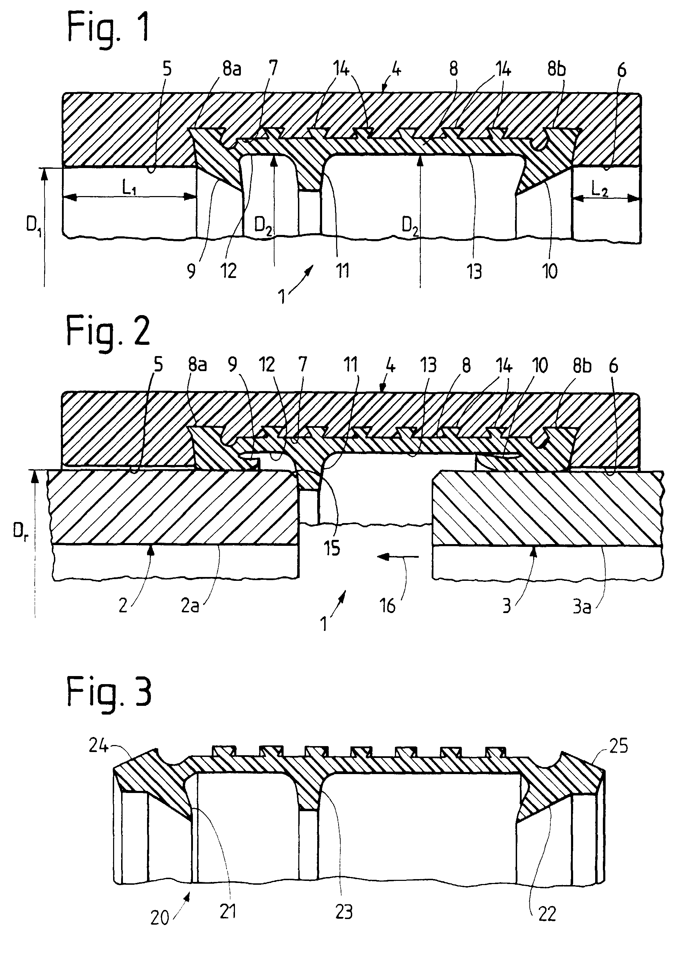

Die in den Figuren 1 und 2 dargestellte und als ganzes mit 1 bezeichnete Muffe zum Verbinden der beiden Kunststoffrohre 2 und 3 weist eine im wesentlichen hohlzylinderförmige, vorzugsweise aus glasfaserverstärktem Kunststoff gebildete Aussenschicht 4 auf, die einen ersten und zweiten zylindrischen Randabschnitt 5 und 6 mit je einem Innendurchmesser $D_1$ aufweist. Diese harte, also kaum verformbare Aussenschicht 4 besitzt an ihrer Innenseite eine zwischen den beiden genannten Randabschnitten 5 und 6 angeordnete ringförmige Aussparung 7, in der eine das Dichtungsmittel bildende Dichtungshülse 8 sitzt. Wie man aus den Figuren 1 und 2 zudem klar ersehen kann, ist der erste zylindrische Randabschnitt 5 wesentlich länger als der zweite Randabschnitt 6.

Damit nun die Muffe 1 auf die beiden Rohre 2 und 3 aufgeschoben werden kann, besitzen diese je einen Rohrendabschnitt 2a bzw. 3a, dessen äusserer Durchmesser $D_r$ etwas kleiner ist als der Innendurchmesser $D_1$ der beiden Randabschnitte 5 und 6. Der Innendurchmesser $D_1$ ist dabei beispielsweise höchstens etwa 0,5% grösser als der Aussendurchmesser $D_r$ der Kunststoffrohre 2 und 3.

Die Länge $L_1$ des ersten Randabschnittes 5 soll nun vorzugsweise so gewählt werden, dass die Beziehung

$$L_1 = 40 \, (D_1 - D_r)$$

oder

$$L_1 = 80 \, (D_1 - D_r)$$

erfüllt wird.

Wie bereits erwähnt, ist der erste Randabschnittes 5 in jedem Fall länger als der zweite. Hierbei ist die Länge $L_1$ des ersten Randabschnittes 5 mindestens doppelt und vorzugsweise mindestens dreimal so lang wie die Länge $L_2$ des zweiten Randabschnittes 6.

Die Dichtungshülse 8 besteht aus einen verformbaren, dichtenden Kunststoff, beispielsweise aus Polyurethan, der sich über die ganze Länge der Aussparung 7 erstreckt. Sie hat an ihren beiden die Stirnflächen bildenden Rändern eine radiale Höhe, die etwa der Tiefe der Aussparung 7 an dieser Stelle entspricht, also einen Innendurchmesser, der im wesentlichen mit dem Innendurchmesser $D_1$ der Randabschnitte 5 und 6 übereinstimmt, so dass die Dichtungshülse 8 an ihren radialen Stirnflächen mit der Innenfläche der zylindrischen Randabschnitte 5 und 6 bündig ist.

Von diesen beiden Stirnseiten geht nun beidseits je eine ringförmige, die Innenfläche der Randbereiche 5 und 6 radial überragende sägezahnförmige Dichtungslippe 9 bzw. 10 aus, die ins Muffeninnere hineinragt und einen Innendurchmesser bildet, der mit zunehmendem Abstand vom Muffenrand kleiner wird.

Die Dichtungshülse 8 besitzt des weitern eine als Anschlag für die beiden miteinander zu verbindenden Rohre 2 und 3 dienende und in das Muffeninnere ragende Rippe 11. Durch diese Rippe 11 wird der sich zwischen den beiden Dichtungslippen 9 und 10 liegende, zylindrische Abschnitt der Dichtungshülse 8 in einen dem ersten Randabschnitt 5 zugewandten kürzeren und einen dem zweiten Randabschnitt 6 zugewandten längeren Teilbereich 12 bzw. 13 unterteilt.

Wie aus der Zeichnung ersichtlich ist, ist der Innendurchmesser $D_2$ dieser ringförmigen Teilbereiche 12 und 13 etwas grösser als der Innendurchmesser $D_1$ der zylindrischen Randabschnitte 5 und 6 und somit auch grösser als der Aussendurchmesser $D_r$ der Rohrendabschnitte 2a und 3a. Damit ist also in diesem inneren Bereich genügend Hohlraum geschaffen, um beim Kuppeln der beiden Rohre 2 und 3 das durch den Pressdruck verdrängte Volumen der Dichtungshülse 8 aufzunehmen und eine einwandfreie Abdichtung der Rohrkupplung zu gewährleisten.

Aus der Zeichnung ist noch ersichtlich, dass die Dichtungshülse 8 an ihrer auf dem Boden der Aussparung 7 aufliegenden Innenseite mehrere zwischen den zwei zylindrischen Endflächen 8a und 8b angeordnete und in die Aussenschicht 4 ragende Ringrippen 14 besitzt.

Im folgenden wird nun die Verwendung der erfindungsgemässen Muffe kurz beschrieben.

In einem ersten Schritt wird die Muffe 1 auf das erste Rohr 2 geschoben, und zwar mit ihrem durch den längeren Abschnitt 5 gebildeten Ende. Wenn dabei der innendurchmesser $D_1$ ein klein wenig grösser ist als der Aussendurchmesser $D_r$ des Rohres 2, lässt sich die Muffe 1 gut auf den Rohrendabschnitt 2a aufschieben, und zwar soweit, bis die Rippe 11 am Rohrende ansteht. Die in der Figur 2 dargestellte Anschrägung 15 am Rohrende macht es zudem gut möglich, dass die Muffe 1 trotz der Dichtungslippe 9 ohne grosse Schwierigkeit auf das Rohr 2 aufgeschoben werden kann. Bei diesem Aufschieben verformt sich die Dichtungshülse 8, wobei die Dichtungslippe 9 komprimiert und umgebogen wird. Wenn man schliesslich das Rohräussere oder das Muffeninnere noch mit einem Klebstoff versieht, so lässt sich die Muffe 1 dauerhaft und unlösbar so mit dem Rohr 2 verbinden, dass die Muffenachse mit der Rohrachse zusammenfällt.

In einem zweiten Schritt wird dann das zweite Rohr 3 in Pfeilrichtung 16 in die Muffe 1 geschoben, und zwar durch das vom kürzeren Randabschnitt 6 gebildete Muffenende, wobei auch bei diesem Einschiebevorgang die Dichtungslippe 10 komprimiert und das Rohr 3 bis an die Rippe 11 herangeschoben wird.

Die Abmessungen von $D_1$, $D_2$ und $D_r$ sowie auch die Länge des zylindrischen Teilbereiches 13 auf der rechten Seite der Muffe 1 ermöglichen ein leichtes Einfahren des Rohres 3 in die Muffe 1, gewährleisten einen dichten Abschluss durch die sägezahnförmige Dichtungslippe 10, und machen es durch den verhältnismässig kurzen, formfesten Randabschnitt 6 möglich, dass die Muffenachse mit der Achse des Rohres 3 einen kleinen Winkel bilden kann.

Für eine optimale Abdichtung des rechten Muffenendes ist nun die dem zweiten Randabschnitt 6 zugewandte Dichtungslippe 10 vorzugsweise grösser als die dem ersten Randabschnitt 5 zugewandte Dichtungslippe 9 und besitzt beispielsweise etwa 20% mehr dichtendes Material als diese.

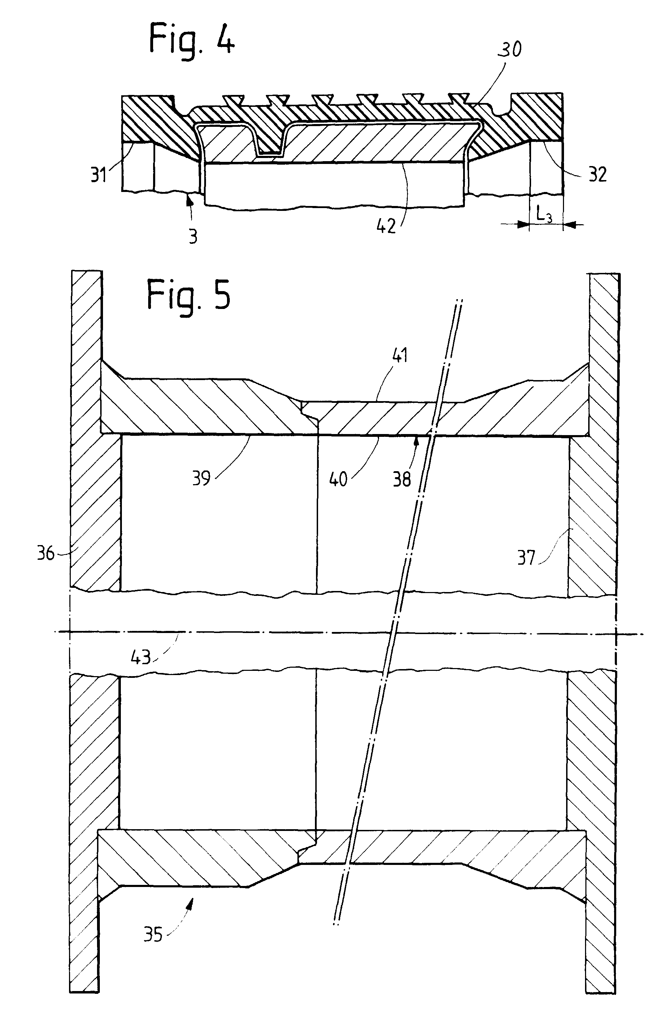

Erfindungsgemässe Dichtungshülsen können - wie in den Figuren 3 und 4 dargestellt - voneinander abweichende Formen haben.

Die in der Figur 3 dargestellte und als ganzes mit 20 bezeichnete Dichtungshülse weist - wie die Dichtungshülse 8 - an ihren beiden Enden je eine sägezahnförmige Dichtungslippe 21 bzw. 22 und eine zwischen diesen angeordnete und als Anschlag für die beiden Rohre dienende Rippe 23 auf. Die Dichtungshülse 20 besitzt aber - im Gegensatz zur Dichtungshülse 8 - an ihren beiden Enden je eine konusförmige Anschrägung 24 bzw. 25.

Die in der Figur 4 dargestellte Dichtungshülse 30 unterscheidet sich von den beiden vorstehend genannten Dichtungshülse im wesentlichen dadurch, dass sie an ihren Enden noch zusätzlich je einen zylindrischen Flansch 31 bzw. 32 aufweist. Der Flansch 32 hat hierbei vorzugsweise eine Länge $L_3$, die höchstens halb so lang ist wie $L_2$.

Die erfindungsgemässe Muffe lässt sich, wie das nachfolgend anhand der Figuren 4 und 5 beschrieben wird, auf sehr einfache Art und Weise herstellen.

Die zur Herstellung einer erfindungsgemässen Muffe verwendbare, als ganzes mit 35 bezeichnete Schleudertrommel weist hierbei zwei Platten 36 und 37 sowie einen mit diesen Platten verbundenen oder verbindbaren metallischen Formring 38 auf. Letzterer besteht dabei aus zwei voneinander trennbaren Teilen 39 und 40.

Beide Teile 39 und 40 bilden im zusammengesetzten Zustand eine Aussparung 41, in die die mit einer Aussenbeschichtung zu überziehende Dichtungshülse passt, wobei dazu diese mit einer - in der Figur 4 dargestellten - metallischen Stützhülse 42 abgestützt wird.

Eine erfindungsgemässe Muffe wird nun so hergestellt, dass man die Dichtungshülse auf dem Formring 38 befestigt, anschliessend den Formring 38 um die Achse 43 rotieren lässt und während der Rotation mit Kunststoffteilchen imprägnierte Glasfasern auf die Dichtungshülse aufwickelt, so dass dadurch eine Aussenschicht herstellbar ist, die im wesentlichen die Form der Aussenschicht 4 hat. Nach einer darauffolgenden Aushärtungsphase wird dann die Schleudertrommel 35 geöffnet und die Muffe aus den Formteilen 39 bzw. 40 herausgezogen.

Falls die zu beschichtende Dichtungshülse an ihren Enden je einen Flansch aufweist, so dienen diese dann insbesondere dazu, ein Eindringen von Kunststoffteilchen und Glasfasern zwischen den Formring 38 und die Dichtungslippen zu verhindern.

Abschliessend sei in diesem Zusammenhang noch darauf hingewiesen, dass die in den Figuren 1 und 2 dargestellten und mit 14 bezeichneten Ringrippen insbesondere dazu dienen, eine feste und unlösbare Verbindung zwischen der Dichtungshülse und der auf dieser aufgebrachten Aussenschicht zu gewährleisten.

**Patentansprüche**

1. Zum Verbinden zweier Kunststoffrohre dienende Muffe (1) mit einer im wesentlichen hohlzylinderförmigen Aussenschicht (4), die einen ersten und zweiten, zur Aufnahme je eines Kunststoffrohres (2, 3) dienenden und im allgemeinen zylindrischen Randabschnitt (5, 6) mit je einem Innendurchmesser $D_1$ aufweist, wobei die Aussenschicht (4) an ihrer Innenseite eine zwischen den beiden genannten Randabschnitten (5, 6) angeordnete ringförmige Aussparung (7) besitzt, in der eine mindestens zum Teil verformbare Dichtungshülse (8, 20, 30) sitzt, welche eine als Anschlag für die beiden miteinander zu verbindenden Rohre (2, 3) dienende und in das Muffeninnere ragende Rippe (11) aufweist und welche an ihren beiden Endabschnitten mit je einer sägezahnförmigen, ins Muffeninnere ragenden, deformierbaren Dichtungslippe (9, 10) versehen ist, dadurch gekennzeichnet, dass der erste zylindrische Randabschnitt (5) länger ist als der zweite, und dass sich zwischen den beiden Dichtungslippen (9, 10) ein zylindrischer Abschnitt befindet, der durch die Rippe (11) in einen dem ersten Randbereich (5) zugewandten kürzeren und einen dem zweiten Randbereich (6) zugewandten längeren Teilbereich (12, 13) unterteilt ist.

2. Muffe nach Anspruch 1 zum Verbinden zweier Kunststoffrohre (2, 3) mit je einem Aussendurchmesser $D_r$, dadurch gekennzeichnet, dass für die Länge $L_1$ des ersten Randabschnittes gilt:

$$L_1 = 40 (D_1 - D_r)$$

3. Muffe nach Anspruch 1 zum Verbinden zweier Kunststoffrohre (2, 3) mit je einem Aussendurchmesser $D_r$, dadurch gekennzeichnet, dass für die Länge $L_1$ des ersten Randabschnittes gilt:

$$L_1 = 80 (D_1 - D_r)$$

4. Muffe nach einem der Ansprüche 1 bis 3, dadurch gekennzeichnet, dass die Länge $L_1$ des ersten Randabschnittes (5) mindestens doppelt und vorzugsweise mindestens dreimal so lang ist wie die Länge $L_2$ des zweiten Randabschnittes (6).

5. Muffe nach einem der Ansprüche 1 bis 4, dadurch gekennzeichnet, dass die Dichtungshülse (8) an ihrer auf dem Boden der Aussparung (7) aufliegenden Innenseite mehrere zwischen zwei zylindrischen Endflächen (8a und 8b) angeordnete und in die Aussenschicht (4) ragende Ringrippen (14) besitzt.

6. Muffe nach einem der Ansprüche 1 bis 5, dadurch gekennzeichnet, dass die Dichtungshülse (8) an ihren radialen Stirnflächen mit der Innenfläche der zylindrischen Randabschnitte (5, 6) bündig ist.

7. Muffe nach Anspruch 6, dadurch gekennzeichnet, dass die dem zweiten Randabschnitt (6) zugewandte Dichtungslippe (10) grösser ist als die dem ersten Randabschnitt (5) zugewandte Dichtungslippe (9).

**8.** Muffe nach Anspruch 1, dadurch gekennzeichnet, dass der Innendurchmesser $D_2$ der beiden Teilbereiche (12, 13) grösser ist als der Durchmesser $D_1$ der beiden zylindrischen Randabschnitte (5, 6).

**9.** Muffe nach einem der Ansprüche 1 bis 8, dadurch gekennzeichnet, dass die Dichtungshülse (30) an ihren beiden Enden je einen ringförmigen Flansch (31, 32) besitzt.

## Claims

**1.** A socket (1) which serves for connecting two plastic pipes comprising an essentially hollow cylindrical outer layer (4) which has a first and second, generally cylindrical edge section (5, 6), each of which serves to receive a plastic pipe (2, 3) and each of which has an internal diameter $D_1$, wherein the outer layer (4) has, on its inner surface, an annular recess (7) which is arranged between the two stated edge sections (5, 6) and in which an at least partially deformable sealing sleeve (8, 20, 30) fits, wherein the sealing sleeve has a rib (11) which serves as a stop for the two pipes (2, 3) to be connected to one another and which projects into the interior of the socket, and wherein the two end sections of said sealing sleeve are each provided with a sawtooth-like, deformable sealing lip (9, 10) which projects into the interior of the socket, characterized in that, the first cylindrical edge section (5) is longer than the second one, and that a cylindrical section which is divided by the rib (11) into a shorter part (12) facing the first edge region (5) and into a longer part (13) facing the second edge region (6) is present between the two sealing lips (9, 10).

**2.** A socket as claimed in claim 1 for connecting two plastic pipes (2, 3), each having an external diameter $D_r$, characterized in that the following is applicable to the length $L_1$ of the first edge section:

$$L_1 = 40 (D_1 - D_r)$$

**3.** A socket as claimed in claim 1 for connecting two plastic pipes (2, 3), each having an external diameter $D_r$, characterized in that, the following is applicable to the length $L_1$ of the first edge section:

$$L_1 = 80 (D_1 - D_r)$$

**4.** A socket as claimed in one of the claims 1 to 3, characterized in that the length $L_1$ of the first edge section (5) is at least twice and preferably at least three times the length $L_2$ of the second edge section (6).

**5.** A socket as claimed in one of the claims 1 to 4, characterized in that the sealing sleeve (8) has, on its inner surface resting on the base of the recess (7), a plurality of annular ribs (14) which are arranged between two annular end surfaces (8a and 8b) and project into the outer layer (4).

**6.** A socket as claimed in one of the claims 1 to 5, characterized in that the radial end faces of the sealing sleeve (8) are flush with the inner surface of the cylindrical edge sections (5, 6).

**7.** A socket as claimed in claim 6, characterized in that the sealing lip (10) facing the second edge section (6) is larger than the sealing lip (9) facing the first edge section (5).

**8.** A socket as claimed in claim 1, characterized in that the internal diameter $D_2$ of the two parts (12, 13) is greater than the diameter $D_1$ of the two cylindrical edge sections (5, 6).

**9.** A socket as claimed in one of the claims 1 to 8, characterized in that the sealing sleeve (30) has an annular flange (31, 32) at each of its two ends.

## Revendications

**1.** Fourreau (1) servant à relier deux tubes en plastique et comportant une couche extérieure (4) sensiblement en forme de cylindre creux qui présente un premier et un second tronçons de bordure (5, 6), servant à recevoir chacun un tube de plastique (2, 3), généralement cylindriques de, chacun, diamètre intérieur $D_1$, la couche extérieure (4) présentant sur sa face intérieure un évidement annulaire (7) qui est disposé entre les deux tronçons de bordure mentionnés (5, 6) et dans lequel a son assise un manchon d'étanchéité (8, 20, 30) qui est au moins partiellement déformable, qui présente une nervure (11) servant de butée pour les tubes (2, 3) à relier l'un à l'autre et pénétrant à l'intérieur du fourreau et qui, à chacun de ses deux tronçons d'extrémité, est muni d'une lèvre d'étanchéité déformable (9, 10), en forme de dents de scie, pénétrant à l'intérieur du fourreau, caractérisé par le fait que le premier tronçon cylindrique de bordure (5) est plus long que le second et qu'entre les deux lèvres d'étanchéité (9, 10) se trouve un tronçon cylindrique que la nervure (11) divise en une première zone partielle (12), plus courte et située du côté de la première zone de bordure (5) et en une seconde zone partielle (13) plus longue et située du côté de la seconde zone de bordure (6).

2. Fourreau selon la revendication 1 pour relier deux tubes de plastique (2, 3) de, chacun, un diamètre extérieur $D_r$, caractérisé par le fait que pour la longueur $L_1$ du premier tronçon de bordure on a:

$$L_1 = 40 (D_1 - D_r)$$

3. Fourreau selon la revendication 1 pour relier deux tubes de plastique (2, 3) de, chacun, un diamètre extérieur $D_r$, caractérisé par le fait que pour la longueur $L_1$ du premier tronçon de bordure on a:

$$L_1 = 80 (D_1 - D_r)$$

4. Fourreau selon l'une des revendications 1 à 3, caractérisé par le fait que la longueur $L_1$ du premier tronçon de bordure (5) est au moins deux fois et de préférence au moins trois fois aussi longue que la longucur $L_2$ du second tronçon de bordure (6).

5. Fourreau selon l'une des revendications 1 à 4, caractérisé par le fait que sur sa face intérieure reposant sur le fond de l'évidement (7), le manchon d'étanchéité (8) possède plusieurs nervures annulaires (14) qui sont disposées entre deux surfaces d'extrémité cylindriques (8a et 8b) et pénètrent dans la couche extérieure (4).

6. Fourreau selon l'une des revendications 1 à 5, caractérisé par le fait qu'à ses surfaces frontales radiales, le manchon d'étanchéité (10) se raccorde à la surface intérieure des tronçons de bordure cylindrique (5, 6).

7. Fourreau selon la revendication 6, caractérisé par le fait que la lèvre d'étanchéité (10) située du côté du second tronçon de bordure (6) est plus grande que la lèvre d'étanchéité (9) située du côté du premier tronçon de bordure (5).

8. Fourreau selon la revendication 1, caractérisé par le fait que le diamètre intérieur D2 des deux zones partielles (12, 13) est supérieur au diamètre D1 des deux tronçons de bordure cylindriques (5, 6).

9. Fourreau selon l'une des revendications 1 à 8, caractérisé par le fait que le manchon d'étanchéité (30) possède, à chacune de ses deux extrémités, un collet annulaire (31, 32).

# Fig. 1

# Fig. 2

# Fig. 3

EP 0 691 506 B1

Fig. 4

Fig. 5

8